# EUROPEAN PATENT APPLICATION

(11) **EP 1 965 289 A1**
(43) Date of publication of application: **03.09.2008**
(21) Application number: 06715361.9
(22) Date of filing: 07.03.2006
(51) Int. Cl.: G06F 3/02, G06F 3/048

(54) **OPERATION GUIDE DEVICE, ELECTRONIC DEVICE, AND OPERATION GUIDE METHOD**

(30) Priority: 29.11.2005 JP 2005343268
(71) Applicant: Matsushita Electric Industrial Co., Ltd., Kadoma-shi Osaka 571-8501 (JP)
(72) Inventor: HATANO, Kouji, c/o Matsushita Electric Co.Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/304391
(87) International publication number: WO 2007/063613

(57) **Abstract**

In a function choosing operation using a hierarchical menu, it is possible for the user to learn easily a function choosing method by pressing a ten-key. A cellular phone terminal 100 includes a cross key 31, a ten-key 32, a process choosing section 2 for choosing a process based on an operation of the cross key and outputting alternative operation information 400 indicating an alternative operation inputting method to a choosing operation, a process executing portion 5 for executing the process based on a chosen result of the process choosing section 2, an LCD 6 for displaying a menu screen, a ten-key backlight 41, a sound source module 42, a speaker 43, an alternative operation presentation controlling portion 40, and a switching section 49. When an operation for choosing a menu item is carried out by the cross key 31, the alternative operation presentation controlling portion 40 changes a lighting state of the ten-key backlight 41 and a ringing state of the sound source module 42 based on the alternative operation information 400, so that the user can grasp intuitively which ten-key should be pressed.

## Description

### Technical Field

The present invention relates to an operation guiding device for guiding input operation procedures in an operation inputting apparatus that inputs information into an information processing equipment such as a cellular phone terminal, an electronic computer, or the like.

### Background Art

Nowadays the cellular phone terminal has become more and more multifunctional. The cellular phone terminal equipped with various functions such as mail sending/receiving, Web browser, still picture/moving picture shooting, music reproducing, TV broadcast receiving, etc. is commercialized and provided to the ordinary user. In order to provide excellent usability to the user of the multifunctional cellular phone terminal, the user interface design that permits a user to choose a desired function from a number of available functions without confusion and execute it serves as a key point.

As the user interface used when the user chooses a necessary process from a plurality of processes and execute it, a hierarchical menu is used widely in the field of electronic computer in the prior art. In most cellular phone terminals, the hierarchical menu is employed as the user interface used to choose the process.

As the operating method applied in choosing a process by using such hierarchical menu, there is the operating method that defines a process item by switching sequentially a focus by means of operations of a cross key, etc. in a situation that the process item can be identified as a chosen candidate out of process items displayed on a menu screen by a focus indication and then by executing an decision operation in a state that a desired process item is focused (referred to as the "sequential switching system" hereinafter). Besides the sequential switching system, there is the operating method that chooses/ decides a process item by inputting an identifier such as the number assigned to the process item by means of the ten-key, etc. (referred to as the "identifier inputting system" hereinafter).

According to the sequential switching system, the user can choose the necessary process finally while checking sequentially all selective process items every menu hierarchy. Therefore, this operating method is suitable for the user who does not know well what functions are provided to the cellular phone terminal, i.e., the beginner. In contrast, according to the identifier inputting system, the user can choose the process quickly only by the sequential operations of the ten-key, etc. Therefore, this operating method is suitable for the user who knows well the functions that the cellular phone terminal has, i.e., the senior user.

In most of the cellular phone terminals, the operations for choosing the process item by the ten-key, etc. are defined as the alternative operations to the operations for choosing the process item by the cross key, etc. Thus, these cellular phone terminals are constructed such that the user can choose the process item by both operating methods of the sequential switching system and the identifier inputting system. Because the cellular phone terminal is constructed in this manner, the beginner can learn gradually how to input the alternative operations by using the ten-key, etc. while choosing the process by the operations of the ten-key, etc. and can grow finally into the senior user who can choose quickly the process only by the alternative operations.

In the prior art, the system for informing a user of an identifier attached to each process item together with the selective process item when the user chooses the process by using the hierarchical menu has been proposed. According to this technique, the user can check a correspondence between the process item and the number attached to the process item sequentially when such user chooses the process item by using the cross key, etc. (see Patent Literature 1, for example). If the system is further constructed such that the user can also choose the process item by inputting the number of the process item by using the ten-key, etc., the user can learn how to input the alternative operation by using the ten-key, etc. to choose the process every time when such user operates the menu.
Patent Literature 1: JP-A-6-120893 (page 4, Fig.2)

### Disclosure of the Invention

### Problems that the Invention is to Solve

However, in the system in the prior art, the procedures for inputting the alternative operation are guided by the texts on the screen, and thus it is hard for the user to understand intuitively a correspondence between the displayed text (the item number, or the like) and the operating element (the ten-key, or the like) used to input the alternative operation. Therefore, such a problem existed that it is not easy for the user to learn the alternative operation.

The present invention has been made to solve the problem in the prior art, and aims at providing an operating inputting system that permits a user to learn easily an alternative operation to the operation that is taken to choose a process.

More concretely, the present invention aims at providing an operating inputting system that permits a user to learn easily an alternative operation inputting method on an operation input accepting section even though the user does not look at the text explaining procedures for inputting the alternative operation on a screen.

### Means for Solving the Problems

In order to solve the problems in the prior art, an operation guiding device of the present invention, includes an operation input accepting section for accepting an operation input and outputting an operation input notification; a process choosing section for choosing a process based on the operation input notification and informing of an alternative operation inputting method to choose the process; and an alternative operation providing section for providing perceptibly the alternative operation inputting method; wherein the alternative operation providing section provides the alternative operation inputting method so that an operation position, which is used to input an alternative operation, out of the operation input accepting section is able to be discriminated.

According to the above configuration, when the operation to choose the process is input, a provided state of the alternative operation providing section can be changed so that the user can discriminate the operation position of the operation input accepting section necessary for the alternative operation to choose the process. Therefore, the user can grasp intuitively which position should be operated to input the alternative operation, and can learn easily the alternative operation to choose the process.

Also, the present invention constitutes an electronic device having a plurality of inputting methods as a method of choosing one process as the electronic device in which, in a case that any process is chosen by using one inputting method, an operation guiding device for providing an alternative operation inputting method as another inputting method other than the one inputting method on an operation input accepting section is provided.

According to the above configuration, even when any process has been chosen by using one inputting method, the user can check the alternative operation inputting method used to choose the process on the operation input accepting section.

Also, an operation guiding method of the present invention, includes a first step of choosing a process based on an operation input; a second step of deriving an alternative operation inputting method to choose the process; and a third step of rendering an operation position used to input an alternative operation discriminable based on the alternative operation inputting method.

According to the above method, when the operation to choose the process is input, it is possible for the user to discriminate the operation position of the operation input accepting section necessary for the alternative operation to choose the process. Therefore, the user can grasp intuitively which position should be operated to input the alternative operation, and can learn easily the alternative operation to choose the process.

Also, an operation guiding device of the present invention further includes a timer section; wherein the timer section starts a counting when the operation input accepting section accepts the operation input, and alternative operation information is provided after a predetermined time is elapsed.

According to this configuration, even though the timer section starts a counting as soon as the operation inputting section is operated, the alternative operation information is not provided while the user operates the operation inputting section one after another within a predetermined time. Conversely, the alternative operation information is provided after the operation inputting section is operated and a predetermined time is elapsed like a situation that the user pauses in user's operation of the operation inputting section. Therefore, such a ease-of-use can be achieved that the alternative operation information is not provided bewilderingly one after another every time when the operation inputting section is operated but the alternative operation information is provided only when the user pauses in user's operation.

### Advantages of the Invention

According to the present invention, when the operation input to choose the process is made, it is possible for the user to identify the operation position of the alternative operation input to the operation input that is taken to choose the process. Therefore, the user can learn easily the alternative operation to the operation that is taken to choose the process.

### Brief Description of the Drawings

[FIG.1] A schematic configurative view of an operating guiding system in a first embodiment of the present invention.
[FIG.2] A configurative view of a cellular phone terminal in the first embodiment of the present invention.
[FIG.3] A first exterior view of the cellular phone terminal in the first embodiment of the present invention.
[FIG.4] A second exterior view of the cellular phone terminal in the first embodiment of the present invention.
[FIG.5] A view explaining contents of menu data that a process choosing section of the cellular phone terminal in the first embodiment of the present invention holds.
[FIG.6] A flowchart showing processing procedures of the process choosing section of the cellular phone terminal in the first embodiment of the present invention.
[FIG.7] A view explaining contents of a lighting color table that an alternative operation presentation controlling portion of the cellular phone terminal in the first embodiment of the present invention holds.
[FIG.8] A view explaining contents of a timbre table that the alternative operation presentation controlling portion of the cellular phone terminal in the first embodiment of the present invention holds.
[FIG.9] A view explaining contents of an interval table that the alternative operation presentation controlling portion of the cellular phone terminal in the first embodiment of the present invention holds.
[FIG.10] A flowchart showing processing procedures of the alternative operation presentation controlling portion of the cellular phone terminal in the first embodiment of the present invention.
[FIG.11] (a) A view explaining an operation of the cellular phone terminal in the first embodiment of the present invention, (b) A view explaining the operation of the cellular phone terminal in the first embodiment of the present invention, and (c) A view explaining the operation of the cellular phone terminal in the first embodiment of the present invention.
[FIG.12] (a) A view explaining the operation of the cellular phone terminal in the first embodiment of the present invention, (b) A view explaining the operation of the cellular phone terminal in the first embodiment of the present invention, and (c) A view explaining the operation of the cellular phone terminal in the first embodiment of the present invention.
[FIG.13] (a) A view explaining the operation of the cellular phone terminal in the first embodiment of the present invention, and (b) A view explaining the operation of the cellular phone terminal in the first embodiment of the present invention.
[FIG.14] A flowchart showing processing procedures of the alternative operation presentation controlling portion of the cellular phone terminal in a second embodiment of the present invention.

### Description of Reference Numerals

- 1: operation guiding device
- 2: process choosing section
- 3: operation input accepting section
- 4: alternative operation providing section
- 5: process executing portion
- 6: LCD
- 31: cross key
- 32: ten-key
- 40: alternative operation presentation controlling portion
- 41: ten-key backlight
- 42: sound source module
- 43: speaker
- 45: alternative operation storing section
- 49: switching section
- 100: cellular phone terminal
- 300: operation input notification
- 320: "0" key
- 321: " 1 " key
- 322: "2" key
- 323: "3" key
- 324: "4" key
- 325: "5" key
- 326: "6" key
- 327: "7" key
- 328: "8" key
- 329: "9" key
- 400: alternative operation information
- 410: lighting command
- 420: ringing command
- 430: sound signal
- 500: chosen result notification
- 600: display command

### Best Mode for Carrying Out the Invention

### (Embodiment 1)

The best mode for carrying out the present invention will be explained with reference to the drawings hereinafter. In this case, like reference numerals are affixed to like constituent elements throughout all drawings used to explain embodiments, and their redundant explanations will be omitted herein.

In the first embodiment of the present invention, there is provided an operation guiding device that provides an alternative operation inputting method as another inputting method other than one inputting method on an operation input accepting section when the user chooses any process by using one inputting method in an electronic apparatus in which a plurality of inputting methods are provided as the method to choose one process.

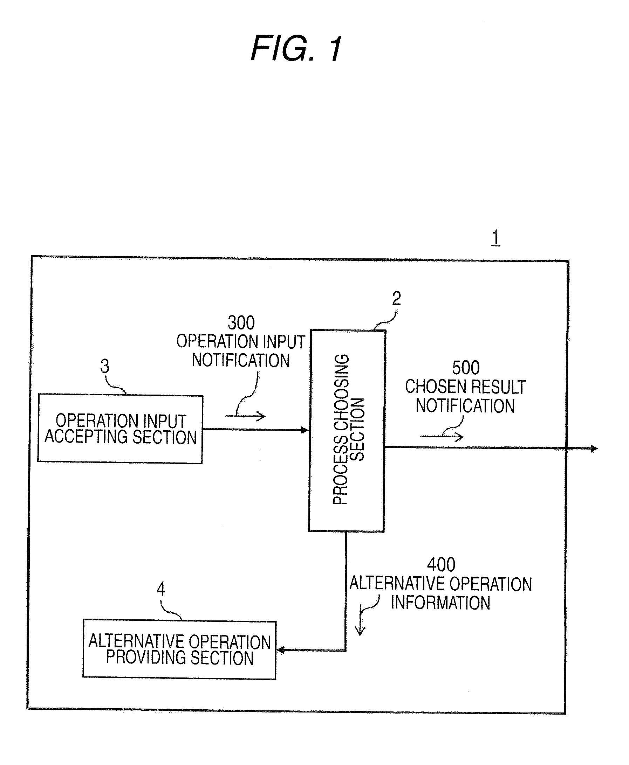

FIG.1 is a schematic configurative view of an operating guiding system 1 in a first embodiment of the present invention. In FIG.1, an operation guiding device 1 includes a process choosing section 2, an operation input accepting section 3, and an alternative operation providing section 4.

The operation input accepting section 3 accepts the operation input and outputs an operation input notification 300. The process choosing section 2 chooses the to-be-executed process based on the operation input notification 300, and outputs a chosen result notification 500 indicating a chosen result. Also, the process choosing section 2 outputs alternative operation information 400 indicating an alternative operation inputting method as another operation input that is taken to choose the process that is chosen based on the operation input notification 300.

The alternative operation providing section 4 provides the alternative operation inputting method perceivably based on the alternative operation information 400. At this time, the alternative operation providing section 4 provides the alternative operation inputting method in such a manner that an operation position of the operation input accepting section 3 used to input the alternative operation can be identified.

Here, the "alternative operation inputting method" recited in this specification means information indicating how the operation input accepting section 3 should be operated to input the alternative operation. For example, the operating direction, an amount of input displacement, the number of operations, etc. of the operation input accepting section 3 correspond to the "alternative operation inputting method" recited in this specification. Also, when the operation input accepting section 3 is constructed by a plurality of operators, an identifier of the operating element, an operating sequence of the operating element, a combination of the operating elements, etc. indicating which operator should be operated correspond to the "alternative operation inputting method" recited in this specification.

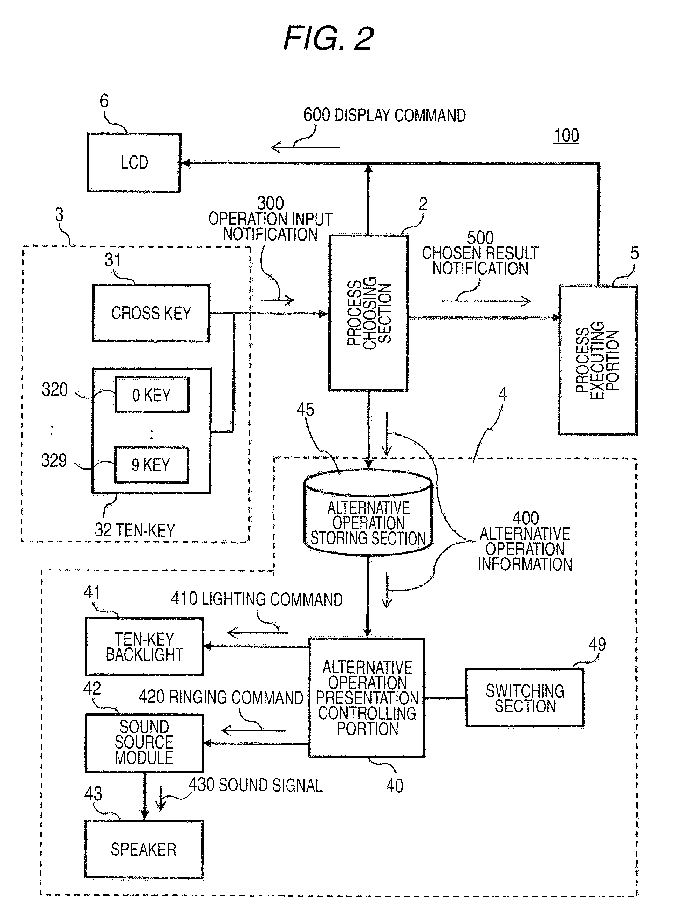

FIG.2 is a configurative view when the operating guiding system 1 in the first embodiment of the present invention is provided to the cellular phone terminal 100. In FIG.2, the cellular phone terminal 100 includes a process executing portion 5, a liquid crystal displaying section (abbreviated as "LCD" hereinafter) 6, and a communicating section (not shown), in addition to the constituent elements explained in FIG.1. Also, a cross key 31 and a ten-key 32 are provided as the operation input accepting section 3, and also an alternative operation storing section 45, an alternative operation presentation controlling portion 40, a ten-key backlight 41, a sound source module 42, a speaker 43, and a switching section 49 are provided as constituent elements of the alternative operation providing section 4.

The cross key 31 detects a pressing operation applied selectively to upper, lower, left, and right end portions and a center portion, and then outputs any one of signals "UP", "DOWN", "LEFT", "RIGHT", and "CENTER" as the operation input notification 300 respectively. The ten-key 32 detects a pressing operation applied selectively to ten keys consisting of a "0" key 320 to a "9" key 329, and then outputs the number of the pressed key, i.e., any one of "0" to "9" as the operation input notification 300.

The process choosing section 2 outputs a display command 600 to the LCD 6 to display the items of executable processes in a hierarchical menu format, executes a switching of the chosen candidate of the process item and a making of the choice decision based on the operation input notification 300 that the cross key 31 outputs, and outputs an item ID of the process item as the chosen result as the chosen result notification 500. Also, the process choosing section 2 outputs the alternative operation inputting method applied to choose/decide the process item by only one pressing, i.e., the key number of the ten-key 32, as alternative operation information 400.

The alternative operation storing section 45 stores temporarily the alternative operation information 400 that the process choosing section 2 outputs, and outputs the stored alternative operation information 400 to the alternative operation presentation controlling portion 40. The alternative operation presentation controlling portion 40 controls operations of the ten-key backlight 41 and the sound source module 42 based on the alternative operation information 400. Also, the alternative operation presentation controlling portion 40 outputs a lighting command 410 that instructs the ten-key backlight 41 to turn ON/OFF and decide a lighting color based on the alternative operation information 400. Also, the alternative operation presentation controlling portion 40 outputs a ringing command 420 that instructs the sound source module 42 to start/stop a ringing and decide an interval and a timbre based on the alternative operation information 400.

The ten-key backlight 41 turns ON/OFF based on the lighting command 410. The sound source module 42 generates a sound based on the ringing command 420, and outputs a sound signal 430. The speaker 43 converts the sound signal 430 into an air vibration, and emits a sound.

The switching section 49 switches whether the alternative operation presentation controlling portion 40 should be operated or not. Because the switching section 49 is provided, the alternative operation presentation can be switched such that the alternative operation method is always provided in choosing a menu while the user is the beginner whereas the alternative operation method is not provided as the user gets used to the alternative operation. As a result, troublesomeness and a useless power consumption caused by an unnecessary operation guide for the senior user can be prevented.

The process executing portion 5 executes various processes to offer the functions provided to the cellular phone terminal 100 to the user. The process executing portion 5 executes start/stop of the process, a change of setting in the cellular phone terminal 100, and the like based on the chosen result notification 500. Also, the process executing portion 5 outputs the display command 600 to present various information to the user, inform the user of the executed progress of the process, and the like. The LCD 6 provides visually the information based on the display command 600.

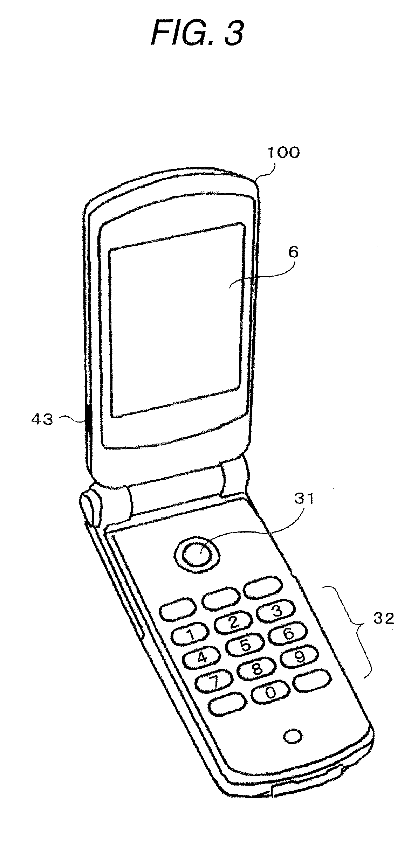

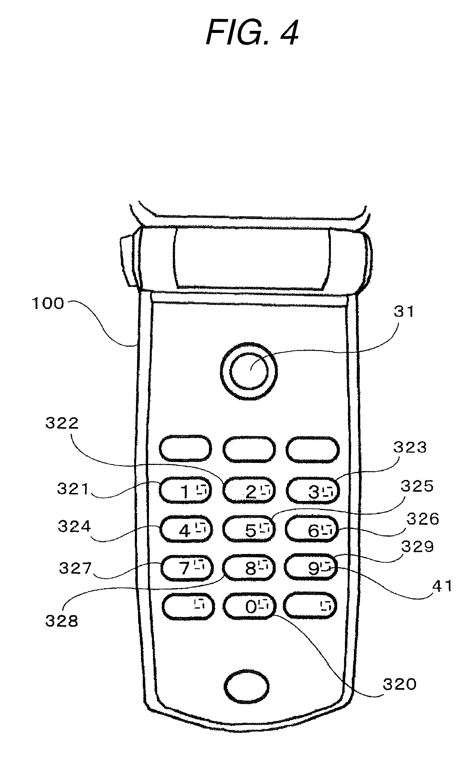

FIG.3 and FIG.4 are views showing an exterior view of the cellular phone terminal 100 in the first embodiment of the present invention. FIG.3 is a view showing the overall cellular phone terminal 100, and FIG.4 is an enlarged view of a lower case of the cellular phone terminal 100 in which the operation input accepting section and the alternative operation providing section are arranged. The ten-key backlight 41 indicated by a broken line is provided at the back of respective keys 320 to 329 of the ten-key 32. Because the ten-key 32 is made of the semitransparent material, a surface of the ten-key 32 can be changed visually by turning ON/OFF the ten-key backlight 41. Also, as the ten-key backlight 41, a light emitting element is provided independently to the keys 320 to 329 and lighting/no lighting and a lighting color can be switched key by key. Therefore, a particular key used to input the alternative operation can be identified by differentiating the lighting states between the light emitting element of the particular key and the light emitting elements of other keys, i.e., lighting/ no-lighting, blinking/no-blinking, lighting color, blinking period, luminance, changing speed of the luminance, etc.

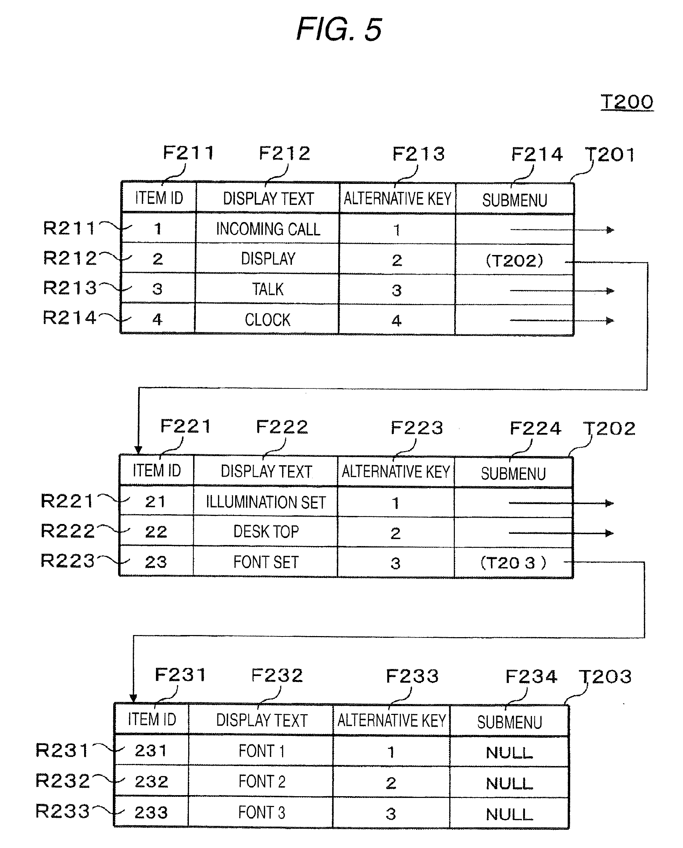

FIG.5 is a conceptual view of menu data T200 that the process choosing section 2 of the cellular phone terminal 100 in the first embodiment of the present invention holds to generate the hierarchical menu. The menu data T200 is constructed by at least menu structural bodies T201, T202, T203, and the menu structural bodies T201, T202, T203 store information of the selective process items displayed in a zeroth hierarchy (=uppermost hierarchy), a first hierarchy, and a second hierarchy of the menu respectively in one record format every process item.

Item ID fields F211, F221, F231 give an item ID that is attached to each process item respectively when the process executing portion 5 identifies the process item. Display text fields F212, F222, F232 give the text that is displayed in a menu screen as a choice of the process item respectively. Alternative key fields F213, F223, F233 give the key number of the ten-key 32 that is to be pressed to choose/decide the process item by one operation input respectively. The information stored in Alternative key fields F213, F223, F233 respectively is the information corresponding to the "alternative operation inputting method".

Submenu fields F214, F224, F234 are a pointer to the menu structural body that stores information of the submenu displayed as a lower hierarchy when the process item is chosen/decided respectively. For example, when the process item "display" (record R212 of the structural body T201) in the zeroth hierarchy is chosen/decided, the process item stored in the menu structural body T202 that the submenu field (field F214) of the record R212 is pointing is displayed as the menu of the first hierarchy serving as the lower hierarchy. Also, the field in which a value of the submenu is "NULL" (field F234) represents that further information of Submenu is not present. In this event, for convenience of explanation, recitations of the menu structural bodies that the submenu fields F214 in the records R211, R213, 214 and the submenu fields F224 in the records R221, R222 are pointing are omitted herein.

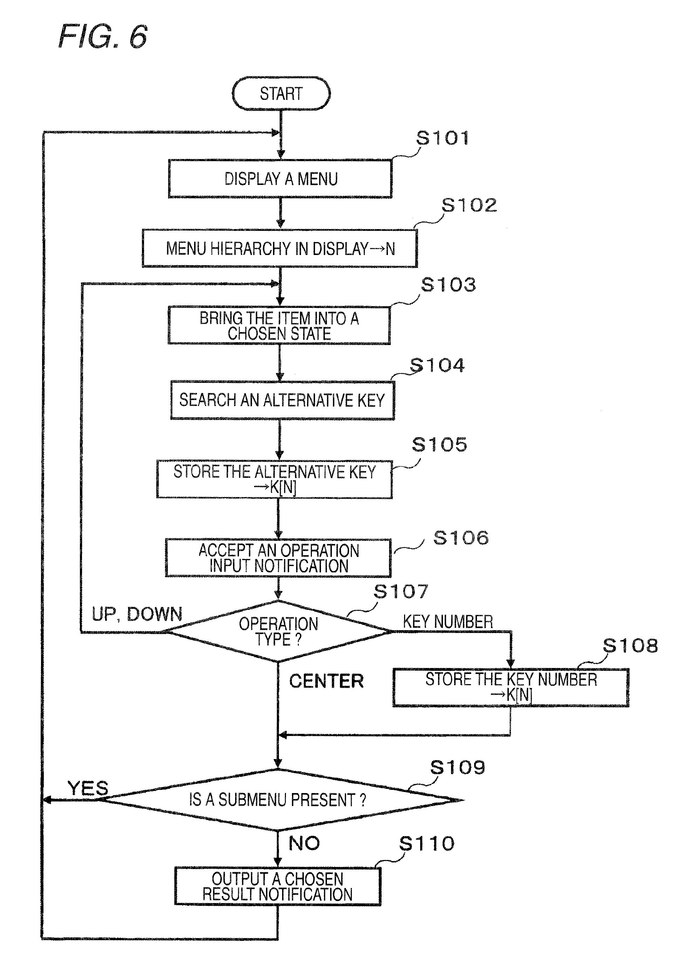

Next, an operation of the first embodiment of the present invention will be explained hereunder. FIG.6 is a flowchart showing processing procedures of the process choosing section 2 and the alternative operation storing section 45 of the cellular phone terminal 100 in the first embodiment of the present invention. First, the process choosing section 2 generates a menu of the uppermost hierarchy (=the zeroth hierarchy) based on the menu data T200 and outputs the display command 600 (step S101). Then, the process choosing section 2 substitutes the hierarchical number of the menu being displayed (for example, "0" when the menu of the uppermost hierarchy is being displayed) into a variable N (step S102).

Then, the process choosing section 2 brings one item out of the process item being displayed into a focused state as the chosen candidate (step S103). In step S104, the process choosing section 2 searches the alternative key by referring to the alternative key field of the record, in which the process item as the chosen candidate is stored, out of the menu structural body constituting the menu data T200. In step S105, the process choosing section 2 outputs the key number of the alternative key searched in step S104, i.e., the alternative operation information 400, and then stores the alternative operation information 400 in the alternative operation storing section 45. Here, the alternative operation storing section 45 stores an arrangement K[] of the key number using the hierarchy number as an index, and the process choosing section 2 stores the key number of the alternative key in a memory area K[N] corresponding to the hierarchy number N of the menu being displayed.

In step S106, the process choosing section 2 accepts the operation input notification 300. In step S107, the process choosing section 2 sorts the process depending on the contents of the operation input notification. In step S107, when the operation input notification 300 is "UP" or "DOWN" indicating the pressing operation applied at the upper or lower portion of the cross key 31, the process choosing section 2 recognizes that the notification is the switching operation of the chosen candidate, and then the process goes back to step S103. In step S107, when the operation input notification 300 is "CENTER" indicating the pressing operation applied at the center portion of the cross key 31, the process choosing section 2 recognizes that the notification is the choose deciding operation of the process item as the chosen candidate, and then the process goes to step S109. In step S107, when the operation input notification 300 is the key number of the ten-key 32, i.e., the alternative key, the process choosing section 2 recognizes that the alternative operation input has been done, and searches the process item using the alternative key as the key number from the menu structural body of the menu hierarchy and then stores the key number in the memory area K[N] of the alternative operation storing section 45 by the similar process to step S105 (step S108), and then the process goes to step S109.

In step S109, the process choosing section 2 decides whether or not a submenu is present, based on the value of the submenu field of the record of the chosen/decided process item. If the submenu is present (YES), the process goes to step S101. Also, in step S109, if the submenu is not present (NO), the process choosing section 2 goes to step S110 and outputs the value of the item ID field of the record of the chosen/decided process item as the chosen result notification 500, and then the process goes back to step S101.

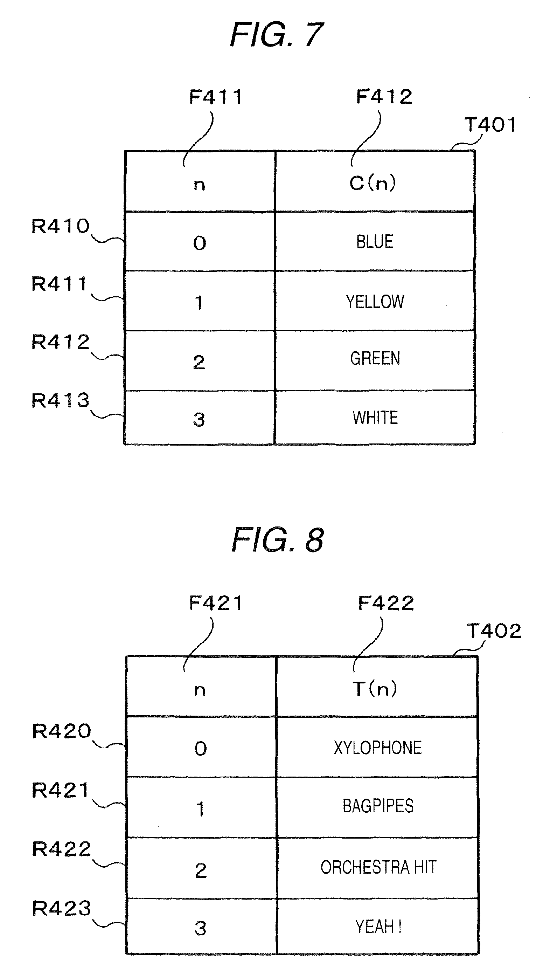

Next, a detailed configuration and an operation of the alternative operation providing section 4 will be explained hereunder. FIG.7 is a view explaining contents of a lighting color table 401 that the alternative operation presentation controlling portion 40 of the cellular phone terminal 100 in the first embodiment of the present invention holds to point a lighting color of the ten-key backlight 41 by the lighting command 410. The lighting color table 401 is constructed by records R410 to R413 that stores a name of color indicating a lighting color C(n)(F412) every hierarchical number n (F411) of the menu respectively.

FIG.8 is a view explaining contents of a timbre table T402 that the alternative operation presentation controlling portion 40 of the cellular phone terminal 100 in the first embodiment of the present invention holds to point the timbre that the sound source module 42 emits by the ringing command 420. The timbre table T402 is constructed by records R420 to R423 that store a timbre T(n)(F422) every hierarchical number n (F421) of the menu respectively. In this table, "Xylophone" (the field F422 of the record R420) represents a timbre of the xylophone, "Bagpipes" (the field F422 of the record R421) represents a timbre of the bagpipes, "Orchestra hit" (the field F422 of the record R422) represents a timbre when musical instruments of the orchestra are rung all at once, and "Yeah" (the field F422 of the record R423) represents a timbre when the person shouts "Yeah !".

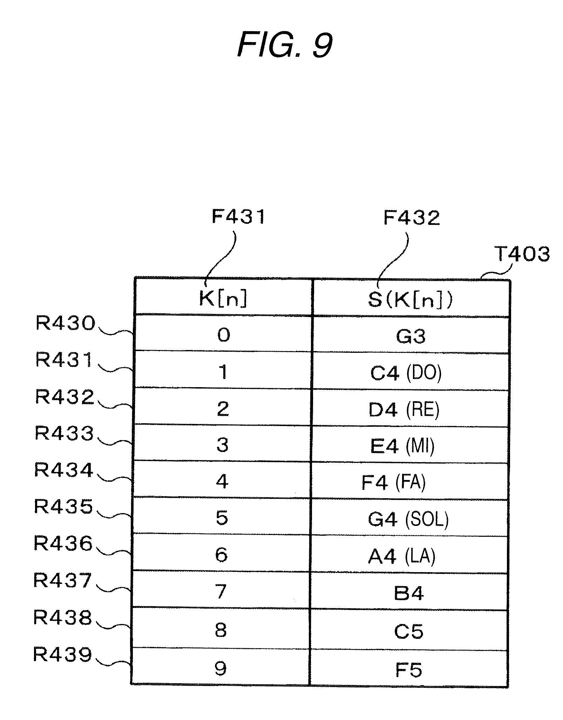

FIG.9 is a view explaining contents of an interval table T403 that the alternative operation presentation controlling portion 40 of the cellular phone terminal 100 in the first embodiment of the present invention holds to point the interval that the sound source module 42 emits by the ringing command 420. The interval table T403 is constructed by records R430 to R439 that store an interval S(K[n])(F432) every key number K[n](F431) respectively. The interval S(K[n]) is represented by the notational system used in MIDI (Music Instrument Digital Interface) standard, etc. in representing the interval. For example, the interval represented by "A4" (the field F432 of the record R436) represents the interval "la" at 440 Hz.

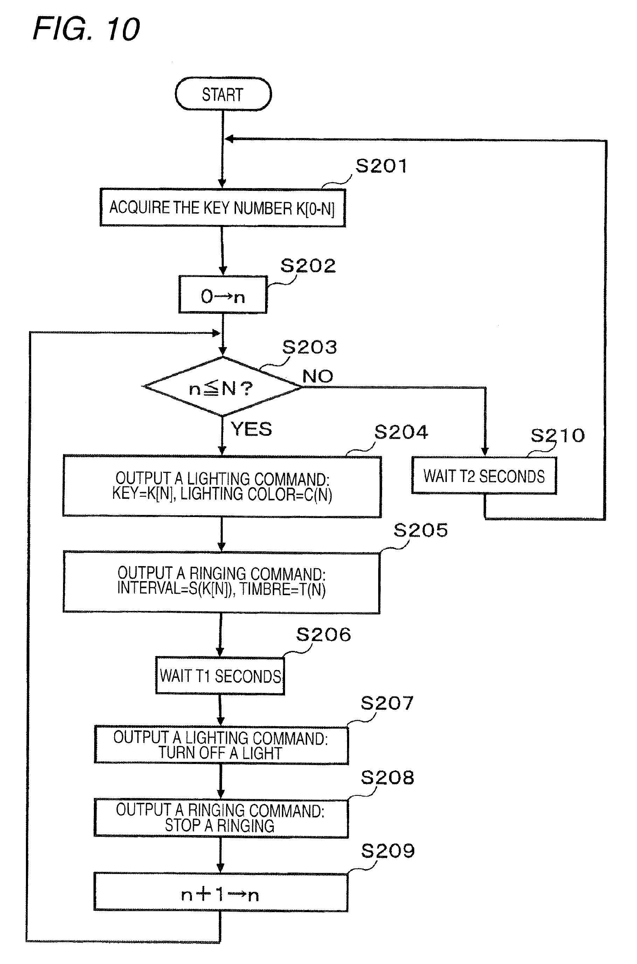

FIG.10 is a flowchart showing process procedures of the alternative operation presentation controlling portion 40 of the cellular phone terminal 100 in the first embodiment of the present invention. The alternative operation presentation controlling portion 40 executes a series of key operations to choose the process item picked up as the current chosen candidate, i.e., the process of presenting the alternative operation inputting method, in compliance with the procedures in steps S201 to S209. The process of the alternative operation presentation controlling portion 40 in FIG.10 is executed asynchronously as different task from the process of the process choosing section. That is, the alternative operation presentation controlling portion 40 is constructed such that this portion advances the process while acquiring the alternative operation information 400 from the process choosing section 2 via the arrangement K[] stored in the alternative operation storing section 45.

As shown in FIG.10, first the alternative operation presentation controlling portion 40 acquires the key number K [0-N] corresponding to respective menu hierarchies from the uppermost hierarchy (hierarchy number=0) to the current hierarchy (hierarchy number=N) stored in the alternative operation storing section 45 (step S201). In step S202, the alternative operation presentation controlling portion 40 sets the uppermost hierarchy number (=0) to a variable n representing the hierarchy number. In step S203, the alternative operation presentation controlling portion 40 decides whether or not the presentation of the key operation up to the current hierarchy has already been ended. If the presentation of the key operation up to the current hierarchy has already been ended, i.e., n is not smaller than or not equal to the hierarchy number N being displayed (NO), the process goes to step S210. In contrast, if the presentation of the key operation up to the current hierarchy has not been ended yet, i.e., n is smaller than or equal to the hierarchy number N (YES), the process goes to step S204.

In step S204, the alternative operation presentation controlling portion 40 acquires a lighting color=C(n) corresponding to the hierarchy number n by referring to the lighting table T401 in FIG.7, and outputs the key number K[n] and the lighting color C(n) as the lighting command 410. The ten-key backlight 41 lightens the light emitting element of the ten-key backlight 41 corresponding to the key number K[n] of the ten-key 32 in color indicated by the lighting color=C(n) based on the lighting command 410, whereby the key of the ten-key 32 used to input the alternative operation in the menu hierarchy n can be indicated in a discriminable way.

In step S205, the alternative operation presentation controlling portion 40 acquires a timbre T(n) corresponding to the hierarchy number n by referring to the timbre table T402 in FIG.8 and acquires the interval (S(K[n]) corresponding to the key number K[n] by referring to the interval table T403 in FIG.9, and outputs the timbre T(n) and the interval (S(K[n]) as the ringing command 420. When the sound source module 42 accepts the ringing command 420, it generates a sound of the interval (S(K[n]) at the timbre T(n) and outputs the sound signal 430, and then the speaker 43 emits the sound signal 430.

In step S206, the alternative operation presentation controlling portion 40 waits the process for t1 seconds. Here, t1 denotes a time interval during while a presentation state instructed by the lighting command 410 and the ringing command 420 is continued, and is decided in advance as t1=300 millisecond, for example.

In steps S207 to S208, the alternative operation presentation controlling portion 40 outputs the lighting command 410 to turn off the light and the ringing command to stop the ringing. Thus, the alternative operation presentation controlling portion 40 stops once the presentation by using the ten-key backlight 41 and the sound source 42 instructed in steps S204 to S205, and gives the presentation of the alternate operation inputting method in the next menu hierarchy (n+1) according to the procedures in step S209 et seq.

In step S203, if the decision is NO, i.e., the presentation of the alternate operation inputting method from the uppermost menu hierarchy to the current hierarchy is ended, the alternative operation presentation controlling portion 40 waits the process for t2 seconds (step S210). Then, the process goes back to step S201. Here, t1 denotes a time interval during while the process stands by temporarily until the alternate operation inputting method is provided once again, and is decided in advance as t2=400 millisecond, for example. If a stand-by time t2 until the re-presentation is set longer than a continuation time t1 at the presentation, a space is given immediately before the re-presentation and thus the user is ready to recognize a starting location of the re-presentation. Therefore, it is possible for the user to learn more easily the alternative operation.

In this case, step S106 in FIG.6 corresponds to the first step recited in Claim 5, step S104 in FIG.6 corresponds to the second step recited in Claim 5, and step S204 in FIG.10 corresponds to the third step recited in Claim 5.

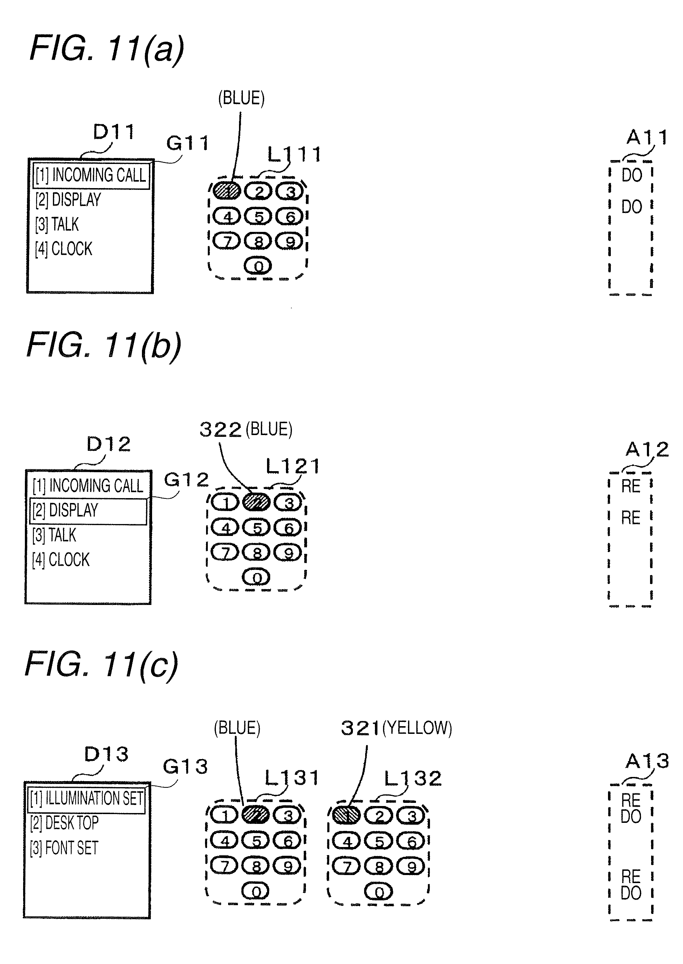

FIG.11 to FIG.13 are views explaining the operation of the cellular phone terminal 100 in the first embodiment of the present invention. FIG.11 to FIG.13 show transitions of the displayed contents of the LCD 6 and the alternative operation presenting state given by the lighting of the ten-key 32 and the sound, which are changed in response to the operation input. More particularly, in the present operation, the operation state is changed in order of FIG.11 (a), FIG.11 (b), FIG.11 (c), FIG.12(a), FIG.12(b), FIG.12(c), FIG.13(a), and FIG.13(b). In respective views of FIG.11 (a) to FIG.13(b), the display contents D11 to D18 of the LCD 6, lighting states L111 to L182 if the ten-key backlights 41, and output sounds A11 to A18 of the speaker 43 are illustrated. Also, because a plurality of lighting states are depicted in the same drawing (for example, L131 and L132 in FIG.11 (c)), it is illustrated how the ten-key backlight 41 should be lightened sequentially (for example, in FIG.11 (c), first the backlight of the ten-key "2" is lightened (L131), and then the backlight of the ten-key "1" is lightened (L132)). In this case, in explanations L111 to L182 of the lighting states of the backlights 41, the key hatched by left-downward inclined lines denotes the lighting in "blue", the key hatched by right-downward inclined lines denotes the lighting in "yellow", and the key shaded by dots denotes the lighting in "green".
Next, an operation of the cellular phone terminal 100 in the first embodiment of the present invention will be explained with reference to FIG.11 to FIG.13 mainly.

First, the process choosing section 2 starts the process in FIG.6. Then, in step S101, the process choosing section 2 outputs the display command 600 to display the display text F212 and the key number of the alternative key in the records R211 to R214 of the menu structural body T201 in FIG.5. The LCD 6 displays the key numbers ([1] to [4]) of the alternative keys and the display texts of respective process items (D11 in FIG.11(a)). In step S102, the process choosing section 2 sets "0" as the hierarchy number of the uppermost hierarchy to N.

In step S103, the process choosing section 2 brings the first process item "[1] incoming call" into its chosen state, and outputs the display command 600 so as to display the focus G11 on the LCD 6 (D11 in FIG.11(a)). In step S104, the process choosing section 2 obtains the alternative key "1" for the process item "incoming call". In step S105, the process choosing section 2 stores the key number "1" in the arrangement K[0]. In step S106, the process choosing section 2 goes to a standby state to accept the operation input notification.

In contrast, in step S201 in FIG.10, the alternative operation presentation controlling portion 40 acquires the key number K[0]=1 stored by the process choosing section 2 in step S105 in FIG.6, and then executes the processes in step S202 et seq. In step S203, the decision is YES because n=0 and N=0. That is, the alternative operation presentation controlling portion 40 decides that the presentation of the key operation has not been ended. Then, the process goes to step S204.

In step S204, the alternative operation presentation controlling portion 40 acquires the lighting color C(0)=blue based on the lighting table T401 in FIG.7, and outputs the lighting command "key=1, lighting color=blue". The ten-key backlight 41 changes its lighting state based on the lighting command 410, and a surface of the "1" key 321 of the ten-key 32 is changed into blue (L111 in FIG.11 (a)).

In step S205, the alternative operation presentation controlling portion 40 acquires the timbre T(0)=xylophone based on the timbre table T402 in FIG.8 and acquires the interval S(K[0])=C4 corresponding to the key number K[0]=1 based on the interval table T403 in FIG.9, and then outputs the ringing command "timbre=xylophone, interval=C4". The sound signal 430 that the sound source module 42 generates based on the ringing command 420 is converted into the air vibration by the speaker 43, and a sound of the xylophone having the interval "do" is emitted (A11 in FIG.11 (a)).

In step S206, the alternative operation presentation controlling portion 40 waits t1 seconds. Then, in the processes in steps S207 and S208, the ten-key backlight 41 is turned off and the sound emitted from the speaker is stopped. Then, in step S209, n goes to n=1 and thus the decision in step S203 becomes NO. Therefore, the alternative operation presentation controlling portion 40 decides that the presentation of the key operation is ended, and then the process goes to step S210. Then, the alternative operation presentation controlling portion 40 waits t2 seconds. Then, the process goes back to step S201. Subsequently, since the above processes are repeated, the "1" key 321 repeats the blinking in blue and the sound of the xylophone having the interval "do" is emitted repeatedly.

Next, when the user presses a lower end of the cross key 31, the process choosing section 2 accepts the operation input notification "DOWN" in step S106 in FIG.6, and then the process goes back to step S103 based on the decision in step S107. In the process in step S103, the process choosing section 2 brings "[2] display" displayed under the process item "[1] display" into a chosen state, and outputs the display command 600 to display the focus G12 on the LCD 6 (D12 in FIG.11(b)).

Subsequently, the similar processes to those applied when the process item "[1] display" is brought into a chosen state are executed. Thus, K[0]=2 is obtained, a surface of the "2" key 322 of the ten-key 32 is blinked in blue, and the sound of the xylophone having the interval "re" is emitted repeatedly (A12 in FIG.11 (b)).

Here, when the user presses a center portion of the cross key 31 to choose/decide the process item "[2] display", the process choosing section 2 accepts the operation input notification "CENTER" in step S106 in FIG.6, and then the process goes to step S109 based on the decision in step S107. In step S109, the process choosing section 2 goes back to step S101 because pointers to the menu structural body T202 that stores information of the submenu are stored in the submenu field F214 in the record R212 of the menu structural body T201 in FIG.5, and displays the menu of the first hierarchy (N=1) based on the menu structural body T202 (D13 in FIG.11 (c)).

In step S103, the process choosing section 2 brings the process item "[1] illumination set" into a chosen state (focus G13 in FIG.11(b)). In step S105, the process choosing section 2 stores K[1]=1 as the key number of the alternative key.

In step S201 in FIG.10, the alternative operation presentation controlling portion 40 acquire the key numbers K[0]=2, K[1]=1. Therefore, the alternative operation presentation controlling portion 40 outputs the lighting command "key=2, lighting color=blue" and the ringing command "interval=D4, timbre=xylophone" in the first loop (n=0) of steps S203 to S209, and outputs the lighting command "key=1, lighting color=yellow" and the ringing command "interval=C4, timbre=bagpipes" in the second loop (n=1). Accordingly, such operations are repeated that the "2" key 322 of the ten-key 32 is lightened in blue (L131 in FIG.11(c)) and then the "1" key 321 is lightened in yellow (L132 in FIG.11(c)). Also, the sound of the xylophone having the interval "re" and the sound of the bagpipes having the interval "do" following to the above sound are emitted repeatedly from the speaker 43 (A13 in FIG.11 (c)).

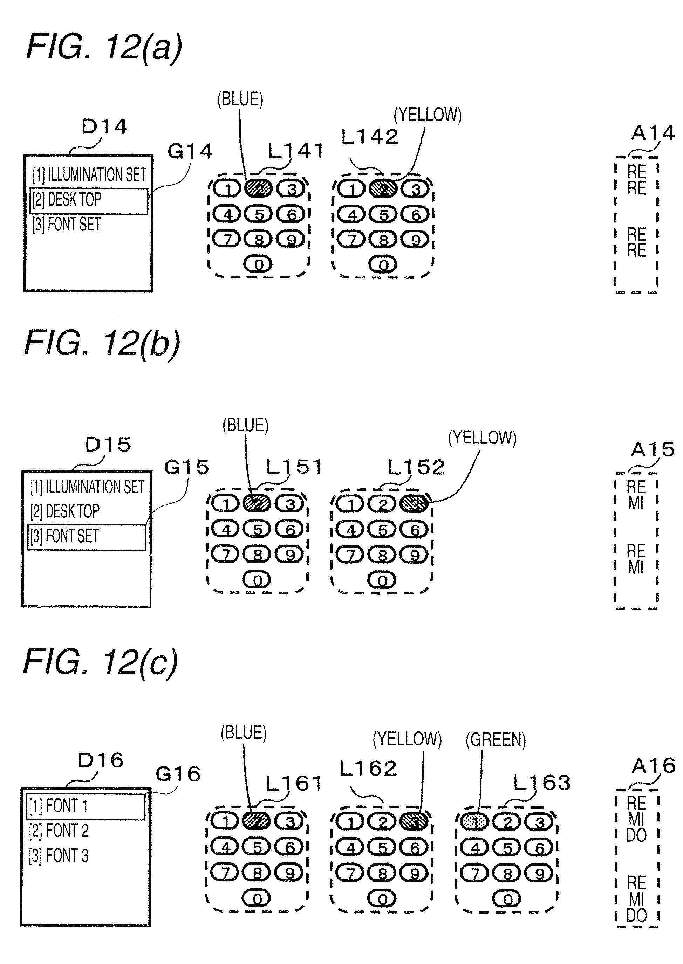

Then, when the user presses a lower end of the cross key 31 to switch the chosen candidate in order of the process items "[2] desk top" (G14 in FIG.12(a)) and "[3] font set" (G15 in FIG. 12(b)), the blinking state of the ten-key 32 is changed from the alternative blinking between the "2" key in blue (L141 in FIG.12(a)) and the "2" key in yellow (L142) to the alternative blinking between the "2" key in blue (L151 in FIG.12(b)) and the "3" key in yellow (L152). Also, the sound emitted from the speaker 43 is changed from the alternative sound emission between the "re" of the xylophone and the "re" of the bagpipes (A14 in FIG.12(a)) to the alternative sound emission between the "re" of the xylophone and the "mi" of the bagpipes (A15 in FIG.12(b)).

In FIG.12(c), when the user presses a center portion of the cross key 31 to choose/decide the process item "[1] font", the process choosing section 2 goes to step S109 since the operation input notification is "CENTER" in step S107 in FIG.6. In step S109, the process choosing section 2 decides that the submenu is not present (NO) since the submenu field F234 of the record R231 of the process item "font 1" of the menu structural body T203 in FIG.5 is NULL. Then, the process goes to step S110.

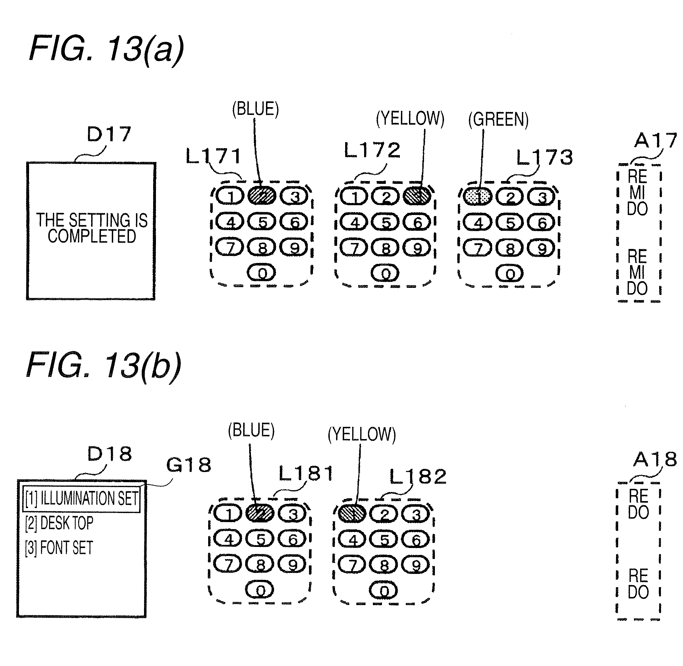

In step S110, the process choosing section 2 outputs the item ID "231" of the process item "font 1" (F231 of the record R231) as the chosen result notification 500. The process executing portion 5 accepts the chosen result notification 500 to set the display font, and outputs the display command 600 to display the screen informing the user of the effect that the setting is completed. At that time, the text "The setting is completed" is displayed on the LCD 6 (D17 in FIG.13(a)), and then the process item on the first hierarchy is displayed (D18).

As explained above, in the cellular phone terminal 100 of the first embodiment of the present invention, when the user executes the operation to choose the process item of the menu by using the cross key 31, such user can know the alternative operation inputting method applied to choose the process item, i.e., can discriminate which ten-key should be operated out of the ten-key 32 to accept the alternative operation. Therefore, the user can learn easily the alternative operation to the operation that chooses the process.

Also, in the cellular phone terminal of the first embodiment of the present invention, the alternative operation inputting method is provided repeatedly after the choosing operation of the process item. Therefore, it is possible to make the user's learning of the alternative operation inputting method easier.

Also, in the cellular phone terminal of the first embodiment of the present invention, since the auditory presentation in addition to the visual presentation is provided, the user can learn the alternative operation not to gaze steadily at the operation position used to input the alternative operation. Therefore, user's convenience can be improved.

Also, in the cellular phone terminal of the first embodiment of the present invention, the lighting color or the timbre is changed every menu hierarchy. Therefore, the user can discriminate clearly the alternative operation inputting sequence.

Also, in the cellular phone terminal of the first embodiment of the present invention, since the lighting color or the timbre is changed based on the hierarchy number of the menu hierarchy, the user can discriminate easily between a single operation of a single hierarchy and continuous operations over a plurality of hierarchies based on the provided state of the alternative operation providing section. For example, the user can discriminate clearly the difference between the alternative operation (L121, A12) in FIG.11(b), i.e., a single operation of the "2" key in the zeroth hierarchy and the alternative operations (L141, L142, A14) in FIG. 12(a), i.e., the continuous operation of the "2" key in the zeroth hierarchy→the "2" key in the first hierarchy.

Here, in the first embodiment of the present invention, the alternative operation inputting method is provided visually or auditorily, but any means may be employed if the operation position to input the alternative operation can be discriminated. For example, the operation position may be provided tactually by the method of causing the vibrating element provided in the operation position for the alternative operation inputting to vibrate, the method of applying a displacement such as projection, depression, or the like to the operating element used in the alternative operation, the method of deforming a case such that the user can discriminate the operation position for the alternative operation inputting, etc.

Also, in case the alternative operation inputting method is set to operate simultaneously a plurality of operators of the operation input accepting section, the operation position may be provided by lightening simultaneously the ten-keys corresponding to a plurality of operators, or the like.

Also, in the first embodiment of the present invention, the operation input accepting section and the alternative operation providing section are put into the same case. In this event, if the operation position to input the alternative operation can be discriminated by the method of projection a visible light onto the operation input accepting section from the alternative operation providing section, the method of superposing the alternative operation inputting method on an image of the operation input accepting section viewed through the alternative operation providing section that is made of the semitransparent material, or the like, the operation input accepting section and the alternative operation providing section may be constructed separately mutually.

### (Embodiment 2)

Next, a second embodiment of the present invention will be explained hereunder. The second embodiment of the present invention is constructed by adding a timer section to the configuration of the first embodiment of the present invention, and is constructed such that a counting of the timer section is started when the operation inputting section is operated and then the alternative operation information is provided by acquiring the key number as far as a predetermined time has elapsed. Therefore, even though the timer section starts a counting as soon as the operation inputting section is operated, the alternative operation information is not provided while the user operates the operation inputting section one after another within a predetermined time. Conversely, the alternative operation information is provided after a predetermined time has elapsed like a situation that the user pauses in user's operation of the operation inputting section. Therefore, such an advantage can be achieved that the ease-of-use can be improved.

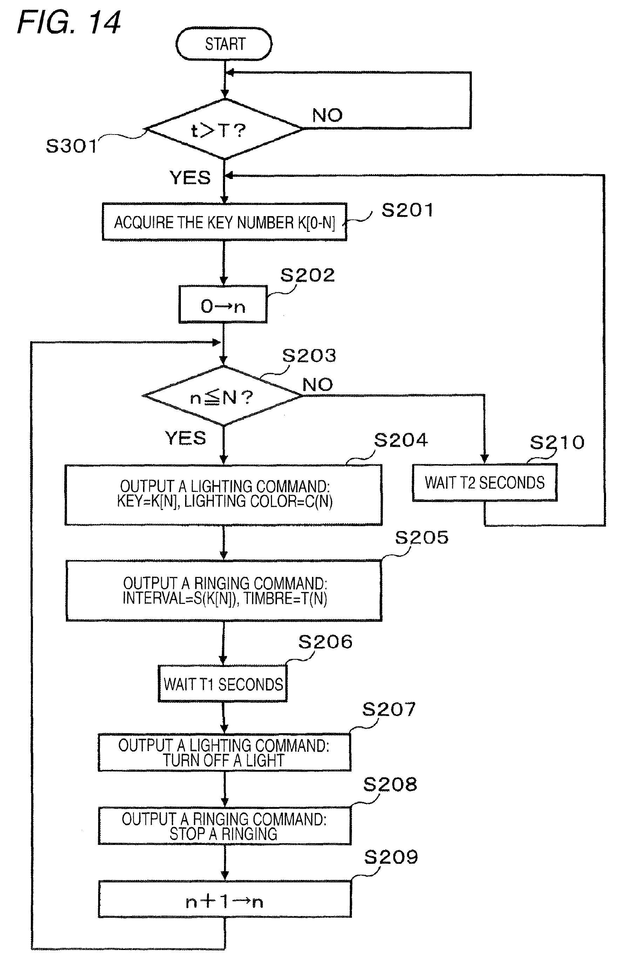

A flowchart showing process procedures of the alternative operation presentation controlling portion of the cellular phone terminal in a second embodiment of the present invention is shown FIG.14. In FIG.14, when the user operates the operation inputting section, the timer section (not shown) starts a counting of the time elapsed "t". Then, the timer section monitors whether or not the time elapsed "t" reaches a predetermined time "T" (step S301). If the time elapsed "t" is below the predetermined time "T", the timer section monitor continues to monitor a time. If the counted time reaches the predetermined time "T", the alternative operation presentation controlling portion 40 acquires the key number K (step S201). Subsequently, similar operations to those in FIG.10 in the first embodiment are executed.
The present invention is explained in detail with reference to the particular embodiments as above. But it is apparent for those skilled in the art that various variations and modifications can be applied without departing from a spirit and a scope of the present invention.
This application is based upon Japanese Patent Application No.2005-343268 filed on November 29, 2005; the contents of which are incorporated herein by reference.

### Industrial Applicability

The operation guiding device and the operation guiding method of the present invention possesses such an advantage that it is possible to make easy the learning of the alternative operation input to the operation input that is taken to choose the process, and is useful to the information processing equipment having a plurality of selective processing functions.

## Claims

1. An operation guiding device, comprising:
an operation input accepting section which accepts an operation input and outputs an operation input notification;
a process choosing section which chooses a process based on the operation input notification and informs of an alternative operation inputting method to choose the process; and
an alternative operation providing section which provides perceptibly the alternative operation inputting method,
wherein the alternative operation providing section provides the alternative operation inputting method so that an operation position, which is used to input an alternative operation, out of the operation input accepting section is able to be discriminated.

2. The operation guiding device according to claim 1, further comprising a timer section,
wherein the timer section starts a counting when the operation input accepting section accepts the operation input, and alternative operation information is provided after a predetermined time is elapsed.

3. An electronic device having a plurality of inputting methods as a method of choosing one process,
wherein, in a case that any process is chosen by using one inputting method, an operation guiding device which provides an alternative operation inputting method as another inputting method other than the one inputting method on an operation input accepting section is provided.

4. An electronic device having a plurality of inputting methods as a method of choosing one process, comprising:
an operation guiding device,
wherein, in a case that any process is chosen by using one inputting method, the operation guiding device provides an alternative operation inputting method as another inputting method other than one inputting method on an operation input accepting section after a predetermined time is elapsed since an operation input to choose the any process by using the one inputting method is accepted.

5. An operation guiding method, comprising:
a first step of choosing a process based on an operation input;
a second step of deriving an alternative operation inputting method to choose the process; and
a third step of rendering an operation position used to input an alternative operation discriminable based on the alternative operation inputting method.

6. An operation guiding method, comprising:
a first step of choosing a process based on an operation input;
a second step of starting a counting of an elapsed time after the first step is executed and detecting that the elapsed time reaches a predetermined time;
a third step of deriving an alternative operation inputting method to choose the process when it is detected that the elapsed time reaches the predetermined time after the first step is executed; and
a fourth step of rendering an operation position used to input an alternative operation discriminable based on the alternative operation inputting method.

## Amended claims

### Amended claims under Art. 19.1 PCT

1. An operation guiding device, comprising:
an operation input accepting section which accepts an operation input and outputs an operation input notification;
a process choosing section which chooses a process based on the operation input notification and informs of an alternative operation inputting method to choose the process; and
an alternative operation providing section which provides perceptibly the alternative operation inputting method,
wherein the alternative operation providing section provides the alternative operation inputting method so that an operation position, which is used to input an alternative operation, out of the operation input accepting section is able to be discriminated.

2. (Amended) The operation guiding device according to claim 1, wherein the alternative operation providing section provides the alternative operation inputting method so that an operation sequence to input an alternative operation is able to be discriminated.

3. (Amended) The operation guiding device according to claim 1, wherein the alternative operation providing section provides repeatedly the alternative operation inputting method.

4. (Amended) The operation guiding device according to claim 1, further comprising:
a timer section;
wherein the timer section starts a counting when the operation input accepting section accepts the operation input, and alternative operation information is provided after a predetermined time is elapsed.

5. (Amended) An electronic device having a plurality of inputting methods as a method of choosing one process,
wherein, in a case that any process is chosen by using one inputting method, an operation guiding device which provides an alternative operation inputting method as another inputting method other than the one inputting method on an operation input accepting section is provided.

6. (Amended) An electronic device having a plurality of inputting methods as a method of choosing one process, comprising:
an operation guiding device,
wherein, in a case that any process is chosen by using one inputting method, the operation guiding device provides an alternative operation inputting method as another inputting method other than one inputting method on an operation input accepting section after a predetermined time is elapsed since an operation input to choose the any process by using the one inputting method is accepted.

7. (Added) An operation guiding method, comprising:
a first step of choosing a process based on an operation input;
a second step of deriving an alternative operation inputting method to choose the process; and
a third step of rendering an operation position used to input an alternative operation discriminable based on the alternative operation inputting method.

8. (Added) The operation guiding method according to claim 7, further comprising:
a fifth step of rendering an operation sequence used to input the alternative operation discriminable based on the alternative operation inputting method.

9. (Added) The operation guiding method according to claim 7, wherein the third step is executed repeatedly.

10. (Added) An operation guiding method, comprising:
a first step of choosing a process based on an operation input;
a second step of starting a counting of an elapsed time after the first step is executed and detecting that the elapsed time reaches a predetermined time;
a third step of deriving an alternative operation inputting method to choose the process when it is detected that the elapsed time reaches the predetermined time after the first step is executed; and
a fourth step of rendering an operation position used to input an alternative operation discriminable based on the alternative operation inputting method.
